# EUROPEAN PATENT APPLICATION

(11) **EP 2 680 163 A1**
(43) Date of publication of application: **01.01.2014**
(21) Application number: 12173732.4
(22) Date of filing: 27.06.2012
(51) Int. Cl.: G06F 17/30

(54) **Document management system, compound, computer readable file, method for interacting with documents stored in a document storage in a document management system, computer program product, and data carrier therefore**

(71) Applicant: OCE-Technologies B.V., 5914 CA Venlo (NL)
(72) Inventor: The designation of the inventor has not yet been filed
(74) Representative: Groen, Mark Jacobus

(57) **Abstract**

Document management system comprising: a document storage; and a metadata storage; wherein the metadata storage is arranged to store structural data with regard to documents stored in the document storage; and wherein the metadata storage is further arranged to store a first action associated with a document stored in the document storage and the first action is further associated with a user or a user role, wherein the first action is to be performed by the specified user or a user being a member of the specified user role and the first action is to be performed on the document the action is associated with; the document management system further comprising: document selection means for generating for a user a view comprising a selection of documents, the documents being associated with first actions that are associated with the user or a user role the user is a member of.

## Description

The present invention relates to a document management system comprising a document storage and a metadata storage for storing metadata for documents stored in the document storage.

The present invention further relates to a compound, computer readable file comprising at least one document comprising informational content for informing a user, and markup information for defining a structure or layout to the informational content aiding in visualising the informational content.

The present invention also relates to a method for interacting with documents stored in a document storage in a document management system, the document management system further storing metadata with regard to the stored documents.

The present invention further relates to a computer program product that, when executed on a processor, performs such method.

The present invention also relates to a data carrier comprising such computer program product.

Document management systems provide a structured and central way of storing documents, allowing easy document retrieval from varying starting points. Furthermore, compared to paper files, document management systems allow to a much larger extend collaborating on a single case or project by removing geographical constraints and allowing concurrent access to even single documents. Document management systems further facilitate workflow models that formalise dealing with a project or case. Although document management systems have come a long way, the paperless office is in most cases still an unfulfilled goal. Various reasons exist for users that require or at least make it desirable to print a document, even though digital alternatives might be present. For instance, users print documents in order to read them on the go, annotate them, take them to meetings, or provide them with a signature (possibly scanning the signed version in order to include a signed version in the document management system again).

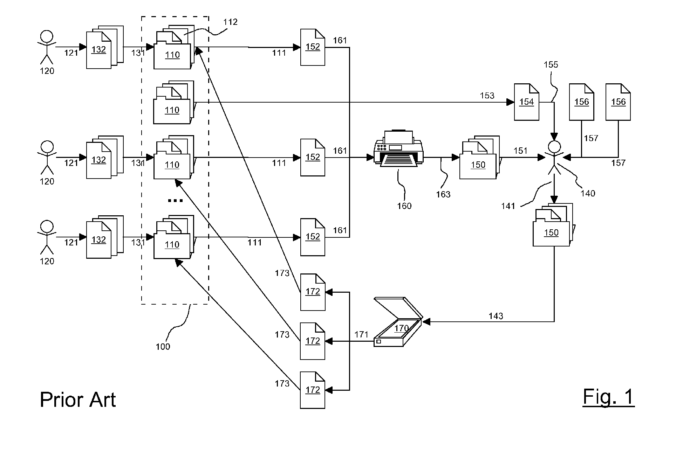

One such workflow that is commonly used is the following (figure 1). A document management system 100 comprises documents 112. These documents 112 are organised in the document management system 100 according to for example projects or cases. This way the documents 112 are grouped into electronic folders 110. Users 120 create and retrieve 121 documents 132 and submit 131 them to the document management system 100, where they are organised into appropriate folders 110 in accordance with metadata provided when the documents 132 are submitted 131, or sometimes at a later stage. When a manager 140 needs to approve a number of documents, typically a secretary will retrieve 111 individual documents 152 from the folders 110 and print 161, 163 them with a printer 160 and collect them in a folder 150 which she will present 151 to the manager 140. The manager 140 might need additional documents 154, 156 in order to take a sound decision. If the secretary is aware of the need for these documents, she may have included them in the folder 150 herself. Otherwise, the manager 140 needs to either retrieve 153, 155 the document 154 himself from the document management system 100, or retrieve 157 the documents 156 from external sources. Next, the manager 140 either approves 141 a document by signing it, or rejects 141 it, probably writing a small note to explain what made him reject the document. A secretary will collect 143 the folder 150 again and scan 171 with a scanner 170 the documents with signatures or other remarks to obtain scanned, digital versions 172 of the documents. Finally, the documents 172 are included in the document management system 100 again, provided with the correct metadata in order to organise the documents in the correct virtual folders 110 again.

The object of the present invention is to provide a document management system that incorporates a workflow subsystem that reduces the need or desirability to print documents stored in the system.

This object is achieved by providing a document management system comprising: a document storage; and a metadata storage for storing metadata for documents stored in the document storage; wherein the metadata storage is arranged to store structural data with regard to documents stored in the document storage; and wherein the metadata storage is further arranged to store a first action associated with a document stored in the document storage and the first action is further associated with a user or a user role, wherein the first action is to be performed by the specified user or a user being a member of the specified user role and the first action is to be performed on the document the action is associated with; the document management system further comprising: document selection means for generating for a user a view comprising a selection of documents, the documents being associated with first actions that are associated with the user or a user role the user is a member of.

Documents are stored in a document storage. In one embodiment the document storage comprises a file system. In an alternative embodiment, the document storage comprises a database system. The metadata may be stored in different ways. In one embodiment, the metadata is stored in the documents themselves. In another embodiment, the metadata is stored in a file system that also stores the documents. In a preferred embodiment the metadata is stored separately from the documents, for example in a database system. The metadata comprises structural data for organising the documents in a structural way. For example, the metadata may comprise organisational information such as departmental designations, project designations, and/or case designations. The metadata may provide contextual information on the document, such as author, case identifier, date the document was received or sent, etc. Furthermore, the metadata may provide organisational information, such as the department or person responsible for dealing with the document.

According to the invention, the metadata further comprises information with regard to a first action. The first action is an action that needs to be performed on a document it is associated with, or at least in conjunction with a document it is associated with. This action needs to be performed by a specific user, or by a user with a specific user role. An example of such an action might be a user approving a document, for example a manager approving an expense sheet for a subordinate, a department approving a contract, or an editor approving a publication. The first action may be a predetermined action that is automatically associated with a document in accordance with predefined conditions, or may alternatively set manually on a ad hoc base by a user of the system. The first action is associated with a document to designate to what document it pertains. Furthermore, the first action is associated with a user or user role to specify what user or users are authorised to perform the action. Users that are not associated with the first action or who do not have a user role that is associated with the first action are not allowed to execute the first action.

The document selection means help the user to perform his tasks by selecting from all documents stored in the document storage, the documents that require action by this particular user. The selected documents are provided to the user in a view that only includes those documents that have first actions associated with them, which first actions are associated with the particular user, or associated with a user role that the particular user is a member of. In a more specific embodiment, the selection includes further selection criteria, for example, only showing first actions which also have a due date, the due date being today. In another embodiment, the document selection means not only select documents to be included in the view, but make a further selection by only including part of a selected document, the part being determined by either a predetermined rule or by the part being specified in the first action. For bigger documents this has the advantage that only relevant parts are included in the view. For example, a contract might go through a substantial review process wherein parties review several revisions of the contract. When the contract is ultimately approved by a higher ranking manager, there might no longer exist a reason to read the full document as all involved departments have finally agreed on the latest revision.

The view generated by the document selection means is independent of the structural data comprised in the metadata. Therefore, a user does not have to consult different views relating to different projects, or cases, or whatever structural data is used to principally organise the documents in the document management system. This allows the user to concentrate on his tasks, namely the tasks corresponding to the first actions stored in the metadata.

In a further embodiment, the present invention provides a document management system, wherein: the metadata storage is arranged such that the first action is associated with at least one further action, the completion of the further action being a requirement before the first action can be initiated, and the document selection means is arranged to exclude the document associated with the first action from the selection of documents until all further actions that are required to be completed, are designated as being completed. The further action pertains to some preparatory tasks that need to be performed before the first action can or may be performed. To the system, the further action may be of a similar nature as the first action with the exception of the first action being dependent on the further action.

For example, the further action might relate to an approval by a direct manager of the author of the document, while the first action relates to the approval by a higher ranking manager who will ultimately decide on the approval of the document. In order to prevent the higher ranking manager from having to reject documents with obvious deficits, the direct manager has to approve the document first.

Another example of a further action might be entry of additional data, or including an additional document in the document management system that is relevant to the approval decision of the first document. In a more specific example, a manager will only approve a purchase order after he has viewed the corresponding quotation. Submitting the quotation to the document management system may be the further action, that is required to be completed before the first action, the manager approving the purchase order is initiated. This means that the manager will not be asked to approve the purchase order before the quotation is submitted.

Multiple further actions may be associated with the first action, requiring the completion of these further actions before the completion of the first action, without any specific order among these further actions. Furthermore, further actions may themselves be associated with other further action, creating a chain of subsequently dependent further actions, the further actions requiring completion in one specific order. Of course the concepts of associating first actions with further actions, and further actions with other further actions may be combined to create complex requirement structures.

The completion status may be stored in one embodiment in the metadata, for example including further metadata with regard to the completion such as the time and date the further action was completed. However, in a simplistic embodiment, the further action is simply deleted upon completion therewith removing the block on the execution of the first action. In this latter example, there is no tracking of completion events though.

In another embodiment, the present invention provides a document management system, wherein the view generated by the document selection means comprises a compound file that comprises the selection of documents. The compound file allows for mobility of the user. It allows him to review documents and perform the requested first action offline, without direct access to the document management system. The compound file may either be downloadable from the document management system, e-mailed to the user, or synchronised with a mobile device of the user during times when there is a connection between the mobile device and the document management system. In one particular embodiment, the compound file is a PDF file.

In a further embodiment, a document management system is provided, wherein the compound file further comprises an interaction element for performing the first action to the document the first action is associated with.

In one embodiment the interaction element takes the form of a clickable button. Clicking the button will perform the first action. In a specific embodiment the documents in the compound file each have two interaction elements: a clickable button to approve the document and a clickable button to reject the document. In a preferred embodiment, the document management system further comprises a workflow system. Based on the first action being performed the document proceeds further in the workflow defined for the document. For example, an approval will move it further in the workflow, while a reject action will send the document back to for example the original submitter of the document, or the document "owner", or the previous person that performed an action on the document. However, it is typically defined in the workflow itself what happens to the document if a given first action is performed. Furthermore, the first action may comprise further actions in addition to "approved" and "rejected". For example, a first action may confirm that all necessary documents have been collected at some stage in the workflow, or that a number of external actions have been performed.

In another embodiment, the interaction element takes the form of a text box, that allows the user to provide information to the document management system. This text box might be connected to a first action being a preparatory step involving the entry of additional information. The first action is actually a further action for another first action, the other first action being an approval step for which the additional information is required in order to assess if the document may be approved.

In an alternative embodiment, the text box is used in combination with a first action being a rejection action, the text box allowing the user to enter some comments why he rejected the document, therewith allowing the original submitter of the document to take corrective action.

In again an alternative embodiment, the interactive element is a link pointing at some address in a server, preferably comprised in the document management system. Requesting the link will inform the document management system either directly that the user performed the first action, or alternatively it opens up a page, for example in a browser that allows the user to perform the first action. In a specific embodiment, opening the page requires the user to authenticate himself. Alternatively, authentication information is encoded in the address of the link.

In a preferable embodiment, the interaction element is displayed on or near the last page of the document, allowing the user to first read the content of the document and then perform the first action without navigating back or forward. In a preferred embodiment, the interaction element is displayed on a blank part of this last page. In an alternative embodiment, the interaction element is displayed not on, but in close proximity to the last page, allowing the viewing application of the generated view to display the last page and the interaction element concurrently. In an alternative embodiment the interaction element is displayed on a separate page, inserted directly before, directly after, or in the document. In again another embodiment, the interaction element is inserted on or in close proximity to a specific page of the document showing the specific page and the interaction element concurrently. This specific page may for example be the page comprising the physical area where the user would put his or her signature if the document was printed.

The present invention provides in a further embodiment a document management system, further comprising: reception means for receiving status information with regard to a document stored in the document storage and an identifier identifying the document the status information pertains to; metadata update means for updating in the metadata storage the metadata corresponding to the document identified by the identifier in the received file to reflect the status information comprised in the received file.

The reception means allow the document management system to receive status information with regard to executed first actions and incorporate such status information in the metadata storage. Such status information might for example be the approval of a document by a user. Preferably, the document management system also stores an identifier of the user that performed the first action in the metadata for tracking and accountability purposes. The reception means might receive the status information directly from the editor or viewer used to view the compound file, or they might be connected to synchronisation means for synchronising data with a mobile device.

The status information might be received in combination with the content of the compound file or might be received on its own.

In one particular embodiment, the compound file is a PDF file and the interaction elements are PDF form elements. In this case the status information is received by the reception means in the form of a FDF (Forms Data Format, introduced into the PDF specification with PDF version 1.2) file or alternatively an XFDF (XML Forms Data Format) file. The reception means parse the FDF or XFDF file in order to extract the status information and update the metadata in the metadata storage.

The present information further provides an embodiment comprising a document management system, wherein the compound file further comprises executable code that is executed when a user interacts with the interaction element, and wherein the code upon execution performs at least one of the following steps: storing predefined status information in a data field in the compound file; storing data entered in an interaction element in a data field in the compound file; sending predefined status information to the document management system through the reception means of the document management system; and sending data entered in an interaction element to the document management system through the reception means of the document management system.

The executable code is responsible for making sure that the status information generated by the user interacting with the interaction element finally ends up in the document management system. The executable code may either store the status information in data fields in the compound file. The status information may then end up in the document management system, because for example the compound file is again synchronised from a mobile device used by the user with the document management system. Alternatively, the executable code is able to directly send a message comprising the status information to the document management server, for example through a wireless network.

In again a further embodiment, the present invention provides a document management system, wherein a document in the generated view that the user has interacted with through its associated interaction element, is hidden from the user in the selection or removed from the selection. Hiding the documents dealt with from the user makes it easier for the user to concentrate on the tasks still to be performed, more particularly, the first actions for the remaining documents that need to be performed. In the case of the generated view being a compound file, this functionality might be realised by means of the viewer used by the user to view the compound file, or might be accomplished by executable code embedded in the compound file, or a combination wherein functionality in the viewer in conjunction with the embedded code leads to the documents that have been dealt with, being hidden. In a particular embodiment, the compound file is a PDF file, and the executable code is embedded JavaScript that hides the pages corresponding to the documents for which the first action has been performed.

In another embodiment according to the present invention, a document management system is provided, wherein the document selection means includes in the selection of documents a further document that is designated as a relevant document for the first action of a document that is to be included in the selection. Designation of the relevant document happens in one particular embodiment manually, for example, by a submitter of a relevant document designating the relevant document as such for a specific first action, or by the submitter of the original document (the document that is associated with the first action). Alternatively, relevant documents may be designated as such by some rule set. For example, the existence of a document with a project identifier corresponding to the project identifier of an original document and the document further being of a specific type, might make it automatically being included as relevant document for a specific first action. As an example, for the approval of a final project report, a rule might be set up that the original project plan and the original project budget are automatically included as relevant documents. When a user is going to approve the final project report, the generated view will automatically also include the original project plan and the original project budget.

In one embodiment the relevant document is also stored in the document storage of the document management system. In another embodiment, the relevant document is an external document that is manually or automatically included in the generated view, either with or without automatically adding the external document to the document storage (and including additional data in the metadata storage). In another embodiment, the external document is only included as a link, linking to the location where the external document can be retrieved. An example of such a relevant document that is an external document might be a link to an external map server to show a route from the office to a conference location as a relevant document that accompanies a travel expense sheet that needs approval. This allows the user approving the travel expense sheet to quickly see if the costs for travelling are balanced with regard to the distance travelled.

In a further embodiment, the present invention provides a compound, computer readable file comprising: at least one document comprising informational content for informing a user, and markup information for defining a structure or layout to the informational content aiding in visualising the informational content; wherein a document is associated with at least one interaction element to be visualised in correspondence with the document; and further comprising executable code that when executed performs at least one of the steps of: storing predefined status information in a data field in the compound file; storing data entered in an interaction element in a data field in the compound file; sending predefined status information to a document management system; and sending data entered in an interaction element to a document management system.

In a further embodiment, the present invention provides a compound, computer readable file, wherein a document is hidden when the first action it is associated with is completed. Initially, documents in the compound file are visible. However, when the user works through the compound file and one-by-one performs the first action associated with the document, the document subsequently becomes hidden. Therefore, all the documents remaining visible are just those documents in the compound file that have not been dealt with by the user.

According to an aspect of the invention, a method is provided for interacting with documents stored in a document storage in a document management system, the document management system further storing metadata with regard to the stored documents, the metadata comprising a first action associated with a document stored in the document storage and the first action further specifying a user or a user role, wherein the first action is to be performed by the specified user or a user being a member of the specified user role and the first action is to be performed on the document the action is associated with, the method comprising the steps of: generating for a user a view comprising a selection of documents, the documents being associated with first actions that specify the user or a user role the user is a member of.

According to another aspect of the invention, a method is provided, wherein the first action is associated with at least one further action, the completion of the further action being a requirement before the first action can be initiated; and during generating the view excluding from the selection of documents the document associated with the first action until all further actions that are required to be completed, are designated as being completed.

In accordance with a further aspect of the present invention, a method is provided, wherein generating a view comprises generating a compound file that comprises the selection of documents.

Furthermore, the present invention provides a method, wherein the compound file further comprises an interaction element for performing the first action to the document the first action is associated with.

The present invention provides, in another embodiment, a computer program product that, when executed on a processor, performs any of the above mentioned methods.

In a further embodiment the present invention further provides a data carrier comprising such a computer program product.

Further embodiments and advantages will be discussed below referring to the appended drawings, wherein:
Figure 1 shows a document management system and document flow according to the prior art;
Figure 2 shows a document management system and document flow according to an embodiment of the present invention;
Figure 3 shows components of a document management system according to an embodiment of the present invention;
Figure 4 shows an embodiment of a rendering of a view generated by a method according to the invention;
Figure 5 shows a method for interacting with documents in the document management system in accordance with the invention; and
Figure 6 shows a method for updating the metadata in the document management system in accordance with the invention.

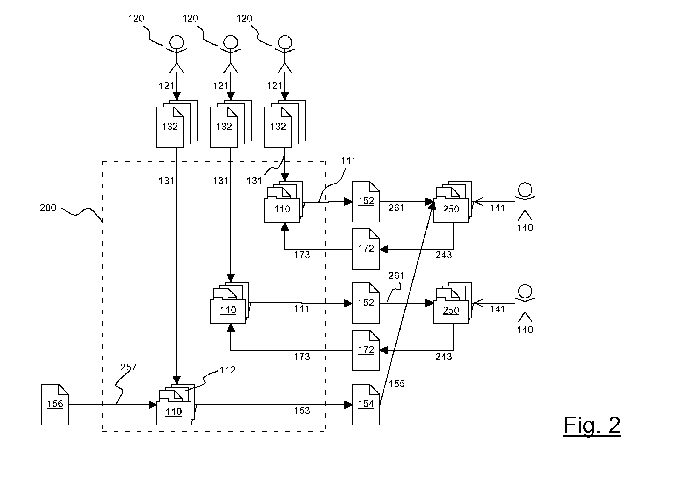

Workers 120 (figure 2) dealing with cases or projects create, retrieve or receive 121 documents 132. The documents 132 are submitted 131 to the document management system 200. Either during submittal 131 and/or afterwards, metadata about the documents 132 is stored in the document management system 200. The metadata includes data that organises the stored documents 112 in some way, for example in accordance with a project name or project number, or a case number. Users may browse the stored documents 112 through virtual folders 110 that are views generated based on the metadata, such as a project number or a case number.

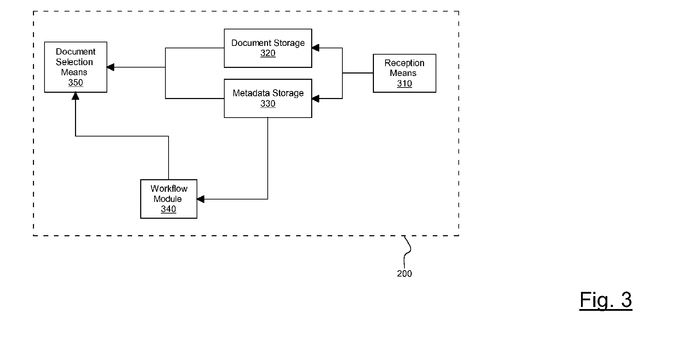

The document management system 200 comprises a workflow module 340 (figure 3) that determines a state of a document 112 based on the metadata stored in relation to the document 112. Examples of document states are "draft", "for review", "for approval", "approved", and "rejected". Draft documents are in the process of being created. They may already be submitted to the document management system 200 for storage. Already storing a draft document in the document management system 200 allows for for example collaborative authoring and progress tracking. The state "for review" may allow co-workers to review the document 112 and provide feedback before a document 112 is submitted to a manager 140 for approval. The state "for approval" allows a document to be submitted to a manager 140. The manager 140 either approves the document 112 if he agrees with the document 112 and its consequences, or he rejects the document 112 if he disagrees. Based on the action performed by the manager 140 the document 112 transits to either the "approved" state or the "rejected" state. The workflow module 340 is responsible for managing in what state a document 112 is, and to what states a document 112 may progress (or revert), based on actions taken in the system. The actions are usually user actions (for example a manager 140 approving or rejecting a document 112), but might also be automated actions based on rules.

In the present embodiment, users 140 are managers that need to approve or reject some documents 112 in the document management system 200. Document selection means 350 (figure 3) receive from the workflow module 340 information on the state of the documents 112. Based on these states the document selection means 350 select 111 (figure 2) documents 112 in the document management system 200 that require action by the user 140 himself or by a user with a user role he is a member of. The selected documents 152 are presented to the user 140 in a view 250 independent of the virtual folders 110 and further content present in the virtual folders 110. This prevents the user 140 from being bothered with irrelevant documents and allows him to focus on his task, in this case approving the documents 152 (or alternatively rejecting them). However, some documents 112 may be of interest for the process of approving a document 152. Therefore, it is possible to designate documents 112 as being of relevance to another document, or to a specific action on a document 112. This designation on the one hand can be done manually by users 120 of the document management system 200, for example, when submitting 131 such a relevant document 132, or when submitting 131 the document 112 to be approved. Such designations are part of the metadata.

Alternatively, such designations are performed automatically by a set of predefined rules, which rules are based on the metadata of the documents 112 concerned. For example, for the approval of a financial report of a project, the project budget may be automatically added as a relevant document. When the document selection means 350 include the financial report for approval, the automatic rule automatically designates a document with a document type being "project budget" and having the same project number as the financial report as a relevant document, resulting in the project budget automatically being included 155 with the financial report in the generated view as a relevant document.

Furthermore, rules may be set up to automatically retrieve 257 external documents 156 as relevant documents 112. For example, a rule may be set up to automatically download a route providing a travelling distance from a public mapping server to be appended to a travel expense sheet in order to allow a manager 140 approving the travel expense sheet to verify a kilometre allowance. This downloaded route may either be automatically added to the document management system 200 as a permanent document 112 and added as a relevant document 154 to the view 250 generated by the document selection means 350, or it may be a temporary document that is not stored in the document management system 200, but only added to the view 250 generated by the document selection means 350.

After the manager 140 has performed 141 an action on a document 152 in the view 250, updated information 172 is sent 243, 173 back to the storage of the document management system 200. The updated information 172 may be an updated version of the original document 152 and the updated version 172 is then stored in the document storage 320 (figure 3). However, the updated information may also consist of metadata only that is stored in the metadata storage 330 or a combination of an updated version of the original document and metadata. In the example of the approval by a manager 140, the original document 152 may be updated by including a text "Approved by Mr. Manager", or just the name of the manager 140 included in the location where a signature is to be inserted. This approved version 172 of the document is then stored in the document storage 320. Additionally, or alternatively, the information in the metadata storage 330 is updated and a status "approved" is added to the metadata of the approved document 152, preferably with additional information specifying who approved the document and the time and date of approval. The metadata might even comprise further information, for example the network address of the computing device used for approving the document 152.

The generated view 250 may be an online generated view for example rendered in a web browser, but preferably, it is a portable document, such as a compound PDF document. The compound PDF comprises all the documents 152 selected by the document selection means 350 and the selected relevant documents 154. It comprises a table of contents listing the selected documents 152 and the selected documents 154. In a preferred embodiment, the table of contents is hierarchically structured and documents 152, 154 sharing similar properties are grouped together. The properties for grouping the documents together may be obtained from the metadata stored in the metadata storage 330. In a project based organisation, the documents 152 and 154 might be grouped on a first hierarchical level based on project codes and on a second hierarchical level based on document types (for example, project reports, purchase orders, and expense sheets).

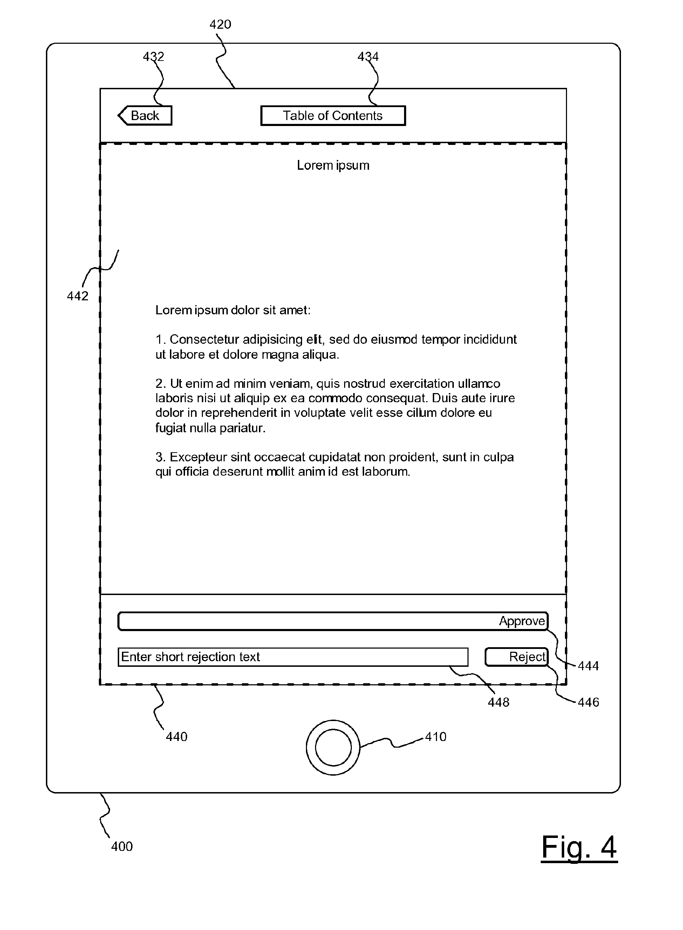

The last page of each document 152 itself is slightly decreased in size in the compound PDF in order to create an empty margin that accommodates control elements for performing the tasks. This is shown in figure 4. A mobile device, such as a tablet computer 400 is operated by means of a hard button 410 and a touch sensitive display 420. On display 420 a standard PDF-viewer application is displayed when the PDF-viewer application is being executed by the tablet computer 400. The PDF-viewer application displays some controls of its own: a back button 432 and a button 434 to access the table of contents of the open document. The remainder of the display, as designated by the dashed box 440, displays the compound PDF that is generated by the document selection means 350. It displays the content of the (last) page 442 of a document 152 that needs to be approved. The page 442 is slightly reduced in size in order to leave some space beneath it for control elements 444, 446, and 448. By tapping the button 444, the user approves the document 152. In a version of the compound PDF for offline use, tapping the button 444 stores in an internal data field of the compound PDF an updated state of document 152, namely an "approved" state. Alternatively, the user may reject document 152. In that case, he optionally enters a note in text box 448 explaining why he rejected the document 152 and taps button 446 to reject document 152. Again, the note entered in text box 448 and the "rejected" state are stored in internal data fields in the compound document. Furthermore, pressing either the "Approve" button 444, or the "Reject" button 446 will hide this document 152 from the table of contents and will hide the pages of document 152 from the compound PDF file. Mutually exclusive first actions such as "approve" and "reject" may, in one embodiment, be implemented as two separate first actions applicable to the same document at the same time. Alternatively, a single first action may be implemented that has two different, mutually exclusive outcomes, in this particular case the approval of the document and the rejection of the document.

Alternatively, the pages are even deleted from the compound PDF file and only internal fields remain in the compound PDF to store the actions taken by the user.

When the user is done, he needs to synchronise the compound PDF with the document management system 200. This may be done by traditional file synchronisation mechanisms that create a copy of the compound PDF within the document management system 200 whereafter the document management system 200 extracts the internal data fields from the compound PDF in order to update the metadata in the metadata storage 330.

Alternatively, the compound PDF file is sent over the network to the document management system 200. One way of sending the compound PDF file is by e-mail. Another way is by uploading the compound PDF through a web interface of the document management system 200.

Again alternatively, executable code corresponding with the action buttons 444, 446 opens a network connection with the document management system 200, and sends update commands directly to the document management system 200 in order to update the metadata storage 330.

The logic to implement the operation of the buttons 444, 446 and text box 448 is implemented in a scripting language, such as JavaScript.

Figure 3 shows the components of an embodiment of the document management system 200. The document storage 320 stores the actual documents. The metadata storage 330 stores metadata with regard to the documents 112 stored in the document storage 320. A workflow module is able to inspect the status of documents 112 stored in the document storage 320 by inspecting the metadata in the metadata storage 330. In cooperation with the workflow module 340, the document selection means 350 select documents 152 for being included in the generated view. For each user 140 that has open first actions without any uncompleted further actions, a compound PDF is generated comprising the documents 152 with open first actions and no uncompleted further actions, and further comprising relevant documents 154. For each document 152 included in the compound PDF the content of the last page is slightly reduced in size and in the empty space created buttons 444, 446 are inserted to allow the user 140 to perform the required first actions.

This action by the document selection means 350 is initiated by a scheduler in order to generate the compound PDF on a regular schedule and e-mail the compound PDF to the user 140. Alternatively, the user 140 may log into the document management system 200 and manually initiate generating the compound PDF. After the compound PDF has been generated, the compound PDF is either e-mailed to him again, or he can download it directly to his mobile device 400.

When the user 140 opens the compound PDF on a mobile device 400, he performs the first actions by clicking/ tapping the buttons 444, 446. Clicking/ tapping the buttons 444, 446 stores the updated information in internal data fields in the compound PDF. When the user 140 has finished, he sends the compound PDF back to the document management system 200, for example by e-mail. The reception means 310 of the document management system 200 receive the compound PDF and extract the internal data fields in order to update the metadata in the metadata storage 330. Optionally, the document storage 320 is updated too, for example by including approved versions of the documents 172 that were approved.

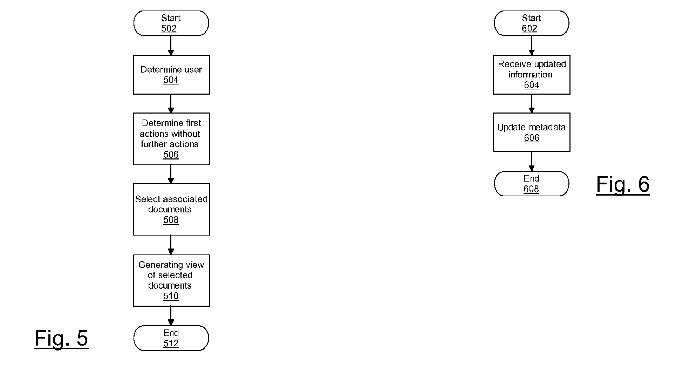

A method for generating the view with documents is illustrated in figure 5. The method starts 502 and first determines 504 for what user 140 to generate the view. If the method is initiated by a periodically run schedule to generate views for every user, the method will iterate through all users 140 (the iteration is not shown in figure 5, but would enclose the steps shown in figure 5). If the method is initiated by the user 140 himself, the determination only has to determine who invoked the method. After the user 140 has been determined 504, it is determined 506 what first actions are associated with this user 140, however, only first actions without any uncompleted further actions the first action depends upon, are considered. For these first actions, the associated documents 152 are selected 508 and optionally any relevant documents 154 associated with the selected documents 152 and/or the determined first actions are selected. Next, a view is generated 510 of the selected documents 152 (and optionally documents 154). In case the generated view is a compound PDF, the documents 152 (and 154) are merged into a single PDF file. A table of contents is included with references to all the documents 152, preferably grouping together references to documents 152 with similar metadata according to a predetermined rule. For example, documents 152 related to the same project or having a first action of the same type are grouped together. Documents may be ordered according to a due date for the first action and/or according to a priority of the document and/or first action, or according to some other criteria. Furthermore, the content of the last page of each document 152 is slightly decreased in size in order to create some empty space. Next, interaction elements 444, 446 are provided in this empty space for the user 140 to perform the required first action. The interaction elements 444, 446 may be implemented as links pointing to addresses in the document management system 200. Following the link will make the document management system 200 register the execution of the first action. Alternatively, the interaction elements 444, 446 may be buttons with associated executable code to either store updated status information 172 in the compound PDF, or to directly send the updated status information 172 to the document management system 200, as already described above.

After the view has been generated 510, the method ends 512.

When the user 140 has interacted with the generated view and executed the first actions, the metadata in the document management system 200 needs to be updated. This is accomplished by the reception means 310 (figure 3) of the document management system 200, which receives updated information 172 and updates the information in the metadata storage 330 and/or the document storage 320.

The reception means 310 receive 604 (figure 6) updated information 172. The updated information 172 may take several forms depending on the embodiment chosen.

In one embodiment, the compound file comprises links in order to execute the first actions. Each interaction element comprises an address, for example a URL (unified resource locator), that encodes either an identifier for the first action, or an identifier for the selected document 152. The reception means 310 implement a web server and web interface. The URL in the link points to the web server of reception means 310. When the URL is requested, the reception means identifies the first action concerned respectively the selected document concerned by examining the requested URL and (preferably after having authenticated the user 140) sends a web page that prompts the user 140 to execute or confirm the first action. In the web page, the user 140 executes/ confirms the first action by clicking a button or link. This initiates another request being sent to the web server in the reception means 310 and triggers the reception means 310 to update the metadata in the metadata storage 330.

Another embodiment is a variant of the embodiment just described. In this embodiment, the URL encodes the first action to be executed and there is no need for the reception means 310 to send a web page to the user 140, as the reception means 310 conclude from receiving the URL that the first action has been performed. The reception means 310 directly reacts by updating 606 the metadata in the metadata storage 330.

In another embodiment, the updated information 172 is the compound file itself comprising the selected documents 152 as well as internal data fields that are set by interacting with the interaction elements 444, 446 in the compound file. The reception means 310 receive the compound file comprising the internal data fields, for example through e-mail, through uploading, or through a file synchronisation mechanism. The reception means 310 extracts the internal data fields and updates 606 the metadata storage 330. In again another embodiment, the data fields are not stored in the compound file itself, but in a separate file such as an FDF file, an XFDF file, or a generic XML file. In contrast to the previously described embodiment, the reception means 310 does not receive the compound file, but the separate file instead and again extracts the data fields and updates 606 the metadata in the metadata storage 330.

In yet another embodiment, the compound file comprises executable code that upon performing the first action opens a network connection to the reception means 310 of the document management system 200 and sends the updated information 172 directly to the reception means 310. The reception means 310 processes the received updated information 172 and updates 606 the metadata in the metadata storage 330.

After the reception means 310 have updated the metadata storage 330, the method ends 608.

Optionally, the reception means may not only record the updated information 172 in the metadata storage 330, but may also generate an updated version of the document 112 that the first action is associated with to reflect the updated status. For example, text or an image is added to the document 112 showing to a reader, that the document 112 was approved (optionally also showing who approved the document and when it was approved).

The previously described embodiments and the embodiments shown in the appended drawings are not to be considered limitative. They merely serve illustrative purposes and are to be regarded only as example embodiments. It is apparent to the person skilled in the art that various modifications and adaptations of the embodiments shown are possible within the scope of the present invention. For example, it is possible to combine features of the various embodiments in order to get further embodiments without departing from the scope of the invention. The scope of protection sought is only limited by the following claims.

## Claims

1. Document management system comprising:
a document storage; and
a metadata storage for storing metadata for documents stored in the document storage;
wherein the metadata storage is arranged to store structural data with regard to documents stored in the document storage; and
wherein the metadata storage is further arranged to store a first action associated with a document stored in the document storage and the first action is further associated with a user or a user role, wherein the first action is to be performed by the specified user or a user being a member of the specified user role and the first action is to be performed on the document the action is associated with;
the document management system further comprising:
document selection means for generating for a user a view comprising a selection of documents, the documents being associated with first actions that are associated with the user or a user role the user is a member of.

2. Document management system according to claim 1, wherein:
the metadata storage is arranged such that the first action is associated with at least one further action, the completion of the further action being a requirement before the first action can be initiated, and
the document selection means is arranged to exclude the document associated with the first action from the selection of documents until all further actions that are required to be completed, are designated as being completed.

3. Document management system according to claim 1 or 2, wherein the view generated by the document selection means comprises a compound file that comprises the selection of documents.

4. Document management system according to claim 3, wherein the compound file further comprises an interaction element for performing the first action to the document the first action is associated with.

5. Document management system according to any of claims 1-4, further comprising:
reception means for receiving status information with regard to a document stored in the document storage and an identifier identifying the document the status information pertains to;
metadata update means for updating in the metadata storage the metadata corresponding to the document identified by the identifier in the received file to reflect the status information comprised in the received file.

6. Document management system according to claim 5,
wherein the compound file further comprises executable code that is executed when a user interacts with the interaction element, and wherein the code upon execution performs at least one of the following steps:
- storing predefined status information in a data field in the compound file;
- storing data entered in an interaction element in a data field in the compound file;
- sending predefined status information to the document management system through the reception means of the document management system; and
- sending data entered in an interaction element to the document management system through the reception means of the document management system.

7. Document management system according to claim 4, 5, or 6, wherein a document in the generated view that the user has interacted with through its associated interaction element, is hidden from the user in the selection or removed from the selection.

8. Document management system according to any of the claims 1-7, wherein the document selection means includes in the selection of documents a further document that is designated as a relevant document for the first action of a document that is to be included in the selection.

9. Compound, computer readable file comprising:
at least one document comprising informational content for informing a user, and
markup information for defining a structure or layout to the informational content aiding in visualising the informational content;
wherein a document is associated with at least one interaction element to be visualised in correspondence with the document; and
further comprising executable code that when executed performs at least one of the steps of:
- storing predefined status information in a data field in the compound file;
- storing data entered in an interaction element in a data field in the compound file;
- sending predefined status information to a document management system; and
- sending data entered in an interaction element to a document management system.

10. Method for interacting with documents stored in a document storage in a document management system, the document management system further storing metadata with regard to the stored documents, the metadata comprising a first action associated with a document stored in the document storage and the first action further specifying a user or a user role, wherein the first action is to be performed by the specified user or a user being a member of the specified user role and the first action is to be performed on the document the action is associated with,
the method comprising the steps of:
- generating for a user a view comprising a selection of documents, the documents being associated with first actions that specify the user or a user role the user is a member of.

11. Method according to claim 10, wherein
the first action is associated with at least one further action, the completion of the further action being a requirement before the first action can be initiated; and
during generating the view excluding from the selection of documents the document associated with the first action until all further actions that are required to be completed, are designated as being completed.

12. Method according to claim 10 or 11, wherein generating a view comprises generating a compound file that comprises the selection of documents.

13. Method according to claim 12, wherein the compound file further comprises an interaction element for performing the first action to the document the first action is associated with.

14. Computer program product that, when executed on a processor, performs the method of claim 10-13.

15. Data carrier comprising a computer program product according to claim 14.
